# EUROPEAN PATENT SPECIFICATION

(11) **EP 1 131 387 B1**
(45) Date of publication and mention of the grant of the patent: **16.11.2005**
(21) Application number: 99927197.6
(22) Date of filing: 03.06.1999
(51) Int. Cl.: C09J 9/00

(54) **MICROCELLULAR THERMOPLASTIC ELASTOMERIC STRUCTURES**
ELASTOMERE MIKROCELLULARE THERMOPLASTISCHE STRUKTUREN
STRUCTURES ELASTOMERES THERMOPLASTIQUES MICROCELLULAIRES

(30) Priority: 03.06.1998 US 89646
(43) Date of publication of application: 12.09.2001
(73) Proprietor: Trexel, Inc., Woburn, MA 01801 (US)
(72) Inventor: PALLAVER, Matthew, Lexington, MA 02173 (US); CHA, Sung, W., West Roxbury, MA 02132 (US)
(74) Representative: HOFFMANN EITLE
(86) International application number: PCT/US1999/012415
(87) International publication number: WO 1999/063019

(56) References cited:
- WO-A-98/47783
- WO-A-99/10395
- US-A- 4 247 652
- US-A- 4 513 518
- US-A- 5 844 009
- US-A- 5 883 144
- US-A- 5 883 145
- US-A- 5 904 965
- K. L. WALTON,S. V. KARANDE: "Polyolefin elastomer foams having enhanced physical properties prepared with dual crosslinking system" ANNUAL TECHNICAL CONFERENCE - SOCIETY OF PLASTICS ENGINEERS, vol. 55, no. 3, 1998, pages 3250-3254, XP001146392

## Description

### Background of the Invention

### Field of the Invention

The present invention is related to foamed structures and, more particularly, to microcellular thermoplastic elastomeric polymeric structures. Such structures are disclosed in WO-A-98/47783 and WO-A-99/10395. Neither of the WO documents was published before the priority date of the present application.

### Background of Related Art

It is known to use thermoplastic foamed material for shoe soles and other energy absorbing impact structures. However, conventional foaming methods sometimes have difficulty producing foamed material having substantially uniform density and cell structure throughout the article. Most conventional techniques can only produce foams with large cells on the order of 100 microns or larger and with densities of about 20-90 percent of the parent material. Fracturing of these large cell foam materials result in low strengths, typically much less than by merely the factor of reduced density. Compression of these large cell foam materials typically results in high compression sets.

Material utilized for athletic shoe soles, particularly the mid-soles, must exhibit requisite levels of softness, resiliency, compressive strength, compressive set resistance, and specific gravity. Mid-sole materials for the athletic footwear industry include both crosslinked and uncrosslinked foamed thermoplastic materials, including a typical mid-sole material, crosslinked ethylene vinyl acetate (EVA). Restrictions on specific gravity of the material useful for shoe soles may sometimes limit the methods which may be used to form shoe sole material, particularly for the mid-sole. For example, injection molding may typically only be used with materials having higher specific gravities than those suitable for use in athletic shoe mid-soles, as lower density materials will often not foam uniformly, thereby causing broken cells within the foamed product.

Thermoplastic elastomers (TPEs) are a group of materials having properties which fall between cured rubbers and soft plastics, and are known to be used for seals, gaskets, shoe soles, and in general, flexible parts. TPEs are hybrid material systems including at least two or more intermingled polymer systems, each having its own phase and softening temperature (Ts). TPEs are made up of a hard thermoplastic phase and a soft elastomeric phase. The useful temperature of a TPE occurs in the region where the soft phase is above and the hard phase is below their respective Ts. The hard phase acts to anchor or restrict the movement of polymer chains of the soft phase, generating resistance to the deformation of the TPE. The reinforcement of the hard phase disappears above its Ts, and the TPE becomes a viscous liquid that can be shaped in the same general manner as an unvulcanized thermoset rubber. Upon cooling below its Ts, the hard phase resolidifies and the TPE again becomes rubberlike. In contrast to the irreversible cleavage of the chemical crosslinks of a thermoset rubber, the heating and cooling through the hard phase Ts is reversible and thermoplastic in behavior. Such properties give TPEs the performance properties of conventional thermoset rubber and advantageously allow it to be molded or extruded as if it were rigid thermoplastic.

Commercial TPEs include block copolymers and elastomer/thermoplastic compositions. Two types of elastomer/thermoplastic compositions include thermoplastic elastomeric olefins (TEOs) and thermoplastic vulcanizates. The hard phase of a TEO is typically a polyolefin such as polypropylene (PP) or polyvinyl chloride (PVC), while the soft phase is typically an elastomer with little or no crosslinking, such as ethylene-propylene rubber or nitrile-butadiene, which are generally used in combination with PP and PVC, respectively. TEOs are generally characterized by low cost, and a good combination of mechanical properties at or near room temperature, including low specific gravities (0.9-1.0), hardness ranging from 50 shore A to 60 Shore D, and ultimate tensile strengths from 4.14 to 20.68 mPa (from 600 to 3000 psi). However, upon heating to 71°C (160°F) or above, TEO properties degrade rapidly due to the lack of crosslinking within the soft or elastomer phase.

Microcellular materials are desirable due to their improved mechanical properties compared to conventional foamed plastics. The improved mechanical properties of microcellular foamed materials are achieved by producing foams with uniformly and generally smaller sized cells than conventional methods, such that fractures are not initiated from cells, and such that the cells inhibit or terminate cracks without structural failure. When foamed using atmospheric gases, microcellular foaming processes are environmentally desirable polymer foaming processes. In general, microcellular foamed materials are produced by saturating a polymer with a gas or supercritical fluid and using a thermodynamic instability, typically a rapid pressure drop, to generate billions of cells per cubic centimeter within the polymer.

British Patent No. 1243575 issued to Green et al. on August 18, 1971 discloses a flexible insole including a heat insulating layer of polyethylene secured thereto.

U.S. Patent No. 3,806,558 issued to Fischer on April 23.1974 discloses a thermoplastic elastomeric blend including a dynamically partially cured blend of monolefin copolymer rubber and polyolefin plastic.

U.S. Patent No. 4,187,621 issued to Cohen on February 12. 1980 discloses a molded inner sole having a top and a bottom layer made substantially of crosslinked polyethylene, preferably having a density of 100-180mm per cubic meter, and a compression set of about 1-6%.

U.S. Patent No. 4,263,727 issued to Mender et al. on April 28, 1981 discloses a sheet for mantifacturing cushioned insoles, including a substrate and a foamed plastic layer laminated together, wherein the foamed plastic layer comprises a closed cell crosslinked polyolefin foam, preferably polyethylene, having a density of 25-200 kg per meter cubed, and thickness of 1.5-15 mm.

U.S. Patent No. 4,247,652 issued to Matsuda et al. on January 27, 1981 discloses a partially crosslinked thermoplastic elastomeric composition.

U.S. Patent No. 4,473,665 to Martini-Vvedensky et al. discloses the formation of microcellular material.

U.S. Patent No. 4,513,518 issued to Jalbert et al. on April 30, 1985 discloses an inner sole with a cushioning layer of crosslinked polyethylene foam laminated to a thinner layer of thermoformable polyethylene foam.

U.S. Patent No. 4,633,877 issued to Pendergast on January 6, 1987 discloses an orthotic device, including variable urometer material comprising varying densities of closed cell microcellular polyethylene.

U.S. Patent No. 5,158,986 to Cha et al., on October 27, 1992 discloses the formation of microcellular material.

U.S. Patent No. 5,348,458 issued to Pontiff on September 20, 1994 discloses a foamed, molded, uncrosslinked article which may be formed from polyethylene.

Accordingly, a polymeric foamed material that addresses the issues of compression set, rebound characteristics, and specific gravity will be valuable.

### Summary of the Invention

The present invention is defined in claim 1 below. The dependent claims are directed to optional and preferred features of the invention.

In one embodiment, the present invention involves the production of articles comprising microcellular thermoplastic elastomeric polymeric structures having an average cell size of less than 100 µm, a compression set ranging from less than about 30 % to less than about 5 %, and a rebound value of at least 50%. The articles may be formed from a thermoplastic elastomeric olefin, preferably metallocene-catalyZed polyethylene. The density of the articles ranges from less than 0.5 gm/cm³ to less than 0.3 gm/cm³.

In another embodiment the structure is crosslinked, through which compression set values as low 2 % may be achieved. A crosslinked structure can be achieved by activating a crosslinking agent in a precursor of the structure, preferably by irradiative crosslinking of a precursor of the structure. Alternatively, no auxiliary crosslinking agent is required where the precursor has sites that are amenable to crosslinking (e.g. an olefin).

The structures of the present invention have a compression set of less than about 30 % when constructed and arranged in a position to be compressed, including repeatedly compressed, at least 50 %. The compression set of less than about 30 % is maintained when the structures are constructed and arranged in a position to be repeatedly compressed, at least 500 times, at least 50 % and having a compression set of less than about 30 %. The structures may also have a rebound of at least about 50 % when constructed and arranged in a position to be compressed at least 50 %, at least 500 times.

In another embodiment, an article comprising a microcellular thermoplastic elastomeric polymeric structure is provided, including a compression set of less than about 30 %, a density of less than 0.5 gm/cm³, a rebound value of at least 50 %, an average cell size of less than 100 µm, and a maximum cell size of less than 125 µm. The article may be crosslinked or uncrosslinked. When crosslinked, the compression set of the article is reducible to less than about 2 %.

In another embodiment, an article comprising a shoe sole constructed for attachment to a shoe upper is provided, formed of thermoplastic elastomeric polymeric microcellular material.

In another embodiment, an article comprising a gasket is provided, formed of thermoplastic elastomeric polymeric microcellular material.

Also disclosed is a method of providing a precursor of a crosslinked microcellular thermoplastic elastomeric polymeric structure and crosslinking the precursor to form a crosslinked microcellular thermoplastic elastomeric polymeric structure. Crosslinking may be achieved by activating a crosslinking agent in the precursor, preferably by irradiating the precursor. ,

The foregoing and other objects, features, aspects and advantages of the invention will become apparent from the following detailed description of the present invention when taken in conjunction with the accompanying drawings. For purposes of clarity, not every component is labeled in every figure.

### Brief Description Of The Drawings

Various embodiments are described herein with reference to the drawings, wherein:
FIG. 1 is a diagram of a batch system for forming the microcellular thermoplastic elastometer polymeric material of the present invention; and
FIG. 2 is an SEM of an exemplary microcellular thermoplastic elastometer polymeric of the present invention;
FIG. 3A is an SEM of an exemplary microcellular thermoplastic elastometer polymeric material in one embodiment of the present invention before crosslinking; and
FIG. 3B is an SEM of the microcellular thermoplastic elastometer polymeric material of FIG. 3A after crosslinking.

### Detailed Description

The present invention involves the discovery that microcellular thermoplastic elastomeric polymeric structures having average cell sizes of less than about 100 microns have improved compression set compared to conventional foamed polymeric structure, typically less than about 30%. The microcellular TPE structures are suitable in applications requiring low compression set, such as, for example, shoe soles and gaskets. The microcellular TPE structures of the present invention may also be crosslinked, providing a significant reduction in compression set. "Microcellular," as used herein, refers to polymeric material having average cell sizes of less than about 100 microns. "Thermoplastic elastomeric material" and "TPE" as used herein, include, but are not limited to materials and structures formed without the use of plasticizers, having properties somewhere in between rubber and plastic. Thermoplastic elastomeric material is described in "TPEs shine with growth rates three to five times that of rubber or plastics", Modem Plastics, Mid-NOVEMBER, 1996, pp. B51-B52.

The microcellular TPE structures of the present invention are particularly advantageous when crosslinked because, surprisingly, the compression set may be greatly reduced compared to other crosslinked foam materials. Crosslinked, as used herein, means that at least 5 % of the polymer chains are connected to another polymer chain. Crosslinking may be accomplished via a variety of known mechanisms, but it is preferred that the article be irradiated to achieve crosslinking, preferably via electron beam radiation. Alternatively, conventional free radical generating or crosslinking agents such as hydrogen peroxide may be incorporated into the polymers.

Materials that are suitable for the microcellular TPE structures of the present invention include both crystalline and semicrystalline materials, including, but not limited to, polyolefins such as polyethylene and polyproplylene, crosslinkable polyolefins, styrenic polymers, polyamides, and polyaromatics such as polystyrene and polyvinyl chloride. Preferably, the materials are TEOs, more preferably thermoplastic elastomeric polyethylene, including metallocene-catalyzed elastomeric polyethylene. Other preferred materials include the ENGAGE™ series, particularly ENGAGE-AFFINITY™, available from Dow Chemical. In Table A below, various parameters for typical foamed shoe sole materials are compared in Table A to values for microcellular foamed ENGAGE-AFFINITY™ material processed according to the method indicated herein, which is described in more detail below.

**Table A**

| Parameter | Method | Sofstep EVA | NBAS EVA | ENGAGE-AFFINITY™ | ENGAGE-AFFINITY™ | ENGAGE-AFFINITY™ (crosslinked) | ENGAGE-AFFINITY™ (crosslinked) | ENGAGE-AFFINITY™ (crosslinked) |
|---|---|---|---|---|---|---|---|---|
| Rebound (%) | | | 44 | 55 | 55 | 57 | 55 | 55 |
| Hardness (Shore A) | ASTM D-2240-86 | 50 | | 30 | 35 | | 35 | 40 |
| Hardness (Asker C) | ASTM | | 55 | 45 | 45 | 66 | 55 | 55 |
| Specific Gravity (gm/cm3) | ASTM D-3575-91 | 0.42 | 0.2 | 0.315 | 0.302 | 0.4 | 0.388 | 0.400 |
| Compression Deflection KPa (psi at 25%) | ASTM D-1056-85 | (>50) >345 | (58) 400 | (31) 214 | (31) 214 | (158) 1089 | (52) 359 | (52) 359 |
| Compression Set (@ 50% compression) | ASTM D-1056-85 | <29 | 6 | 11.8 | 11.8 | 2.3 | 0 | 0 |

In one embodiment, uncrosslinked microcellular TPE structures of the present invention are produced preferably having a compression set of less than about 30%, more preferably less than about 20%, more preferably less than about 10%, and more preferably still less than about 5% or 3%, at 50% compression. The microcellular TPE structures also preferably include an average cell size of less than about 100 microns, more preferably less than about 50 microns, more preferably less than about 25 microns, more preferably still less than about 10 microns, and a maximum cell size of about 125 microns, preferably about 75 microns, more preferably about 50 microns, and more preferably still about 25 microns. In preferred embodiments, the microcellular TPE structures may have a density in the range of about 0.25 to about 0.50 gm/cm³, and more preferably, less than about 0.30 gm/cm³. Also in preferred embodiments, the microcellular TPE structures may include a rebound of at least about 50 %, and an Asker C hardness of at least about 30, more preferably at least 50, and more preferably still at least 75.

A set of preferred embodiments includes all combinations of these preferred average cell sizes, maximum cell sizes, compression set, density and rebound values. That is, a preferred embodiment in this set of embodiments includes a microcellular TPE structure having a compression set of less than about 30%, a density ranging from 0.25 to 0.50 gm/cm³, a rebound of at least 50%, an average cell size of less than about 75 microns, and a maximum cell size of about 100 microns, a more preferred embodiment of the invention includes a compression set of less than about 20%, a density of less than 0.30 gm/cm³, a rebound of at least 50%, an average cell size of less than about 50 microns, and a maximum cell size of about 75 microns, etc.

In another embodiment, crosslinked microcellular TPE structures are produced, having a compression set of less than about 30, an average cell size of less than about 75 microns with a maximum cell size of about 100 microns. Preferably, the compression set of the crosslinked microcellular TPE structure is less than 20 %, more preferably less than about 10 %, and more preferably still less than 2%. As previously described with reference to the uncrosslinked microcellular TPE structures, in preferred embodiments the crosslinked microcellular TPE structures also preferably include a compression set of less than 30%, average cell sizes of less than about 100 microns, more preferably less than about 50 microns, more preferably less than about 25 microns, more preferably still less than about 10 microns, and a maximum cell size of about 125 microns, preferably about 75 microns, more preferably about 50 microns, and more preferably still about 25 microns, a rebound value of at least about 50%, a density ranging from about 0.25 to about 0.5 gm/cm³, and an Asker C hardness value of at least about 30, more preferably at least 50, and more preferably still at least 75.

Articles of the invention can be constructed and arranged to be repeatedly compressed at least 500 times, or preferably at least 1,000 times, or preferably at least about 10,000 times, according to some embodiments. Other articles of the invention may be constructed and arranged to be continuously compressed, over the lifetime of the article, according to other embodiments. Those who are skilled in the art understand the meaning of a structure that is constructed and arranged to be repeatedly or continuously compressed. Articles that are constructed and arranged to be repeatedly compressed include such structures as an inner sole and a shoe sole, or the like. Articles that are constructed and arranged to be continuously compressed include such structures automotive sealants, building and construction sealants, gaskets used to seal a door or window, or the like. The microcellular TPE structures according to the invention, whether uncrosslinked or crosslinked, may be shaped to form flexible plastic parts, such as, for example, inner soles, shoe soles, seals, and gaskets, automotive sealants, building and construction sealants, or any other structure where low compression set is desirable.

One preferred embodiment of the present invention is a microcellular TPE structure that is shaped to form a shoe sole, providing good compression set and rebound in combination with a light weight structure which is advantageous for shoe soles, particularly athletic shoe mid-soles. Those of ordinary skill in the art understand the meaning of the term "shoe sole" as used herein. For the sake of clarity, the term "shoe sole" is meant to refer to an article having substantially the shape of a human foot. That is, typically an elongated member having opposing rounded ends, with an indentation on one side therebetween corresponding to the instep of a foot. The member may be substantially the same thickness from end to end, or alternatively, one end may be thicker than the other. The shoe sole of the present invention may be useful in many applications, including, but not limited to, athletic shoes, footwear, boots, hiking boots, ski boots, orthopedic shoes, or any other type of footwear structure where the properties of the present structure would be beneficial. Particularly preferred embodiment of the present invention, providing exemplary compression set, is a crosslinked microcellular TPE structure formed from metallocene catalyzed polyethylene that is shaped to form an inner sole, or a shoe sole.

Another preferred embodiment of the present invention is a microcellular TPE structure that is shaped to form a gasket, providing good compression set and rebound in combination with a light weight structure which, as described above, is advantageous for automotive sealants, building and construction sealants, gaskets used to seal a door or window, or the like.

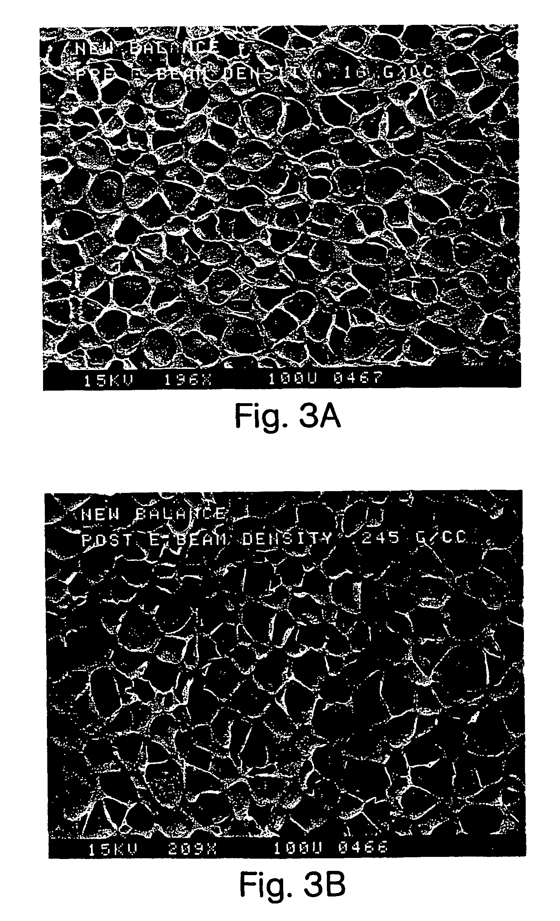

FIGS. 3A and 3B illustrate a method of providing the crosslinked microcellular TPE polymeric structures. The method involves providing a precursor of a crosslinked microcellular TPE polymeric structure, and crosslinking the precursor to form the structure. According to the method, the crosslinking of the precursor may be performed by either by activating a crosslinking agent contained in the structure, or by irradiating the precursor. The irradiation of the precursor may be accomplished by any means of providing radiation including, but not limited to, ultraviolet, electric beam, and x-ray. Preferably, the crosslinking is accomplished by electron beam radiation. FIGS. 3A and 3B are SEMs of a precursor material before and after crosslinking via electron beam radiation. Those of skill in the art know that crosslinking may provide an increase in the density of polymeric material, while simultaneously decreasing the compression set of the material. Surprisingly, in some instances, when the microcellular TPE polymeric structures have been crosslinked, compression set values have been reduced to zero.

The following example illustrates in greater detail a method of providing such crosslinked material.

### Example

An unfoamed 3 mm thick sample of injection molded ENGAGE-AFFINITY™ (SM-1300, available from Dow Chemical Co.) having a density of 0.87 gm/cm³, a melt index of 30, and a Mooney viscosity of 2.5 was used for the experiment.

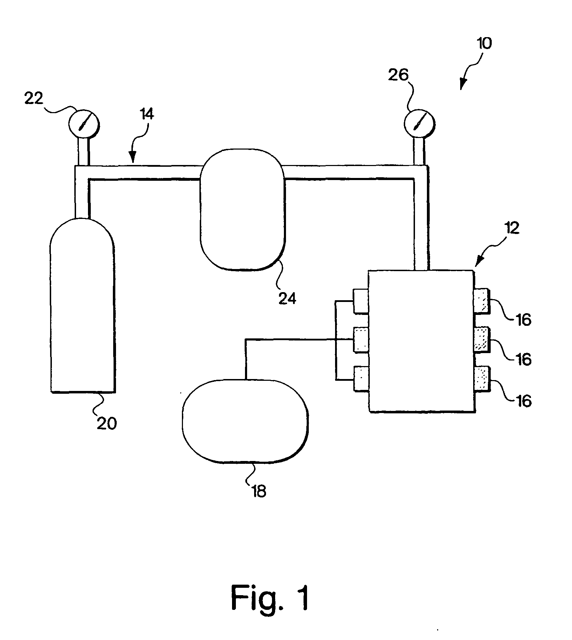

The sample was foamed using a system as in Fig. 1, which illustrates a typical microcellular batch foaming system 10. The foaming system 10 includes a foaming chamber 12 and a blowing agent delivery system 14. The foaming chamber 12 includes band heaters 16 surrounding the chamber 12 for providing heat to the chamber 12, and a temperature controller 18 for controlling the temperature in the chamber 12. The blowing agent delivery system 14 includes a source of blowing agent 20, a pressure controller 22 for controlling the delivery pressure of the blowing agent 20, pressurizing means 24 for pressurizing the blowing agent, thereby preferably rendering the blowing agent supercritical, and a pressure controller 26 for controlling the delivery pressure of the supercritical blowing agent to the foaming chamber 12.

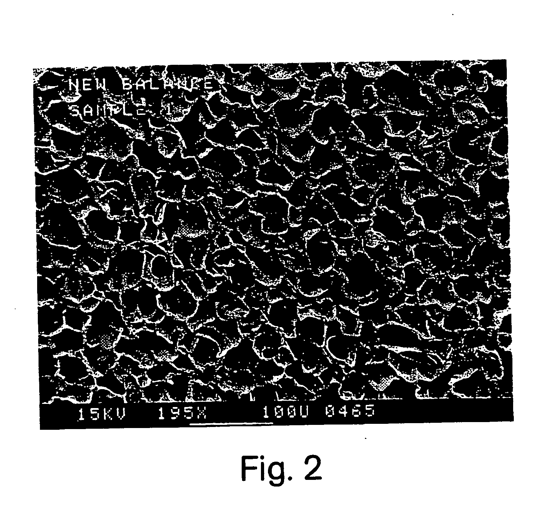

The sample was placed in the foaming chamber 12, and pressurized CO₂ was delivered to the chamber at about 10.34 to about 2.07MPa (about 1500 to about 300 psi). The CO₂ diffused into the sample, as it was saturated with the supercritical CO₂ from 30 minutes to 24 hours. Upon opening the chamber and releasing the pressure in the chamber, the sample was subjected to a rapid decrease in pressure, followed by immersion in a 50° C glycerin bath, allowing the dissolved CO₂ in the sample to form nucleation sites which expand to cause the material to foam, producing a microcellular article as shown in FIG. 2, and having the characteristics set forth in Table A below. Specimens 1 and 2 were not crosslinked. Two of the samples (Specimens 3 and 4) were crosslinked with a dose of about 29 MRad via exposure to electron beam radiation to effect crosslinking.

The compression set, compression deflection, specific gravity, rebound, and hardness of the samples were measured using standard test methods, listed below in Table B. The results listed in Table B show that both uncrosslinked and crosslinked microcellular TPE structures exhibit properties that are desirable for many of the applications described herein.

**Table B**

| Parameter | Method | 1 | 2 | 3 | 4 |
|---|---|---|---|---|---|
| Electron Beam Energy (MRad) | Electron Beam | 0 | 0 | 29 | 29 |
| Compression Set (@ 50% compression) | ASTM D-1056-85 | 11.8 | 11.8 | 0 | 0 |
| Compression Deflection KPa (psi at 25%) | ASTM D- 1056-85 | (31) 214 | (31) 214 | (52) 359 | (52) 359 |
| Specific Gravity (gm/cm3) | ASTM D-3575-91 | 0.315 | 0.302 | 0.388 | 0.400 |
| Rebound (%) | | 55 | 55 | 55 | 55 |
| Hardness, Shore A | ASTM D-2240-86 | 30 | 35 | 35 | 40 |
| Hardness, Asker C | ASTM | 45 | 45 | 55 | 55 |

It will be understood that various modifications may be made to the embodiments disclosed herein. For example, although the embodiments disclosed herein are with reference to ENGAGE-AFFINITY™, any TPE polymer material may be used to form the structures of the present invention, particularly metallocene-catalyzed TPEs. Additionally, the structures may also advantageously be formed used a continuous process, rather than the illustrative batch process described herein.

## Claims

1. An article comprising a microcellular thermoplastic elastomeric polymeric structure including an average cell size of less than 100 µm and a compression set of less than 30%.

2. An article as in claim 1, with a compression set of less than 20%.

3. An article as in claim 2, with a compression set of less than 10%.

4. An article as in claim 3, with a compression set of less than 5%.

5. An article as in claim 1, wherein the microcellular thermoplastic elastomeric polymeric structure is a thermoplastic elastomeric olefin.

6. An article as in claim 1, with a density of less than 0.5 gm/cm³.

7. An article as in claim 6, with a density of less than 0.3 gm/cm³.

8. An article as in claim 1, wherein the microcellular polymeric thermoplastic elastomeric structure is a crosslinked structure.

9. An article as in claim 5, wherein the microcellular thermoplastic elastomeric polymeric structure is metallocene-catalyzed polyethylene.

10. An article as in claim 8, wherein the crosslinked thermoplastic elastomeric polymeric structure is a thermoplastic elastomeric olefin.

11. An article as in claim 8, wherein the crosslinked microcellular thermoplastic elastomeric polymeric structure is metallocene-catalyzed polyethylene.

12. An article as in claim 1, the microcellular polymeric structure constructed and arranged in a position to be repeatedly compressed, at least 500 times, at least 50%.

13. An article as in claim 11, with a compression set of less than 2%.

14. An article as claimed in claim 1, with a density of less than 0.5 gm/cm³ and a maximum cell size of less than 125 µm.

15. An article as claimed in claim 14, with a compression set of less than 2%.

16. An article as in any one of claims 1, 14 and 15, with an average cell size of less than 75 µm.

17. An article as in claim 16, with an average cell size of less than 50 µm.

18. An article as in claim 17, with an average cell size of less than 30 µm.

19. An article as claimed in any one of the preceding claims, which is a shoe sole constructed for attachment to a shoe upper.

20. An article as claimed in any one of the preceding claims, which is a gasket.

21. An article claimed in any one of the preceding claims, which is a seal.

22. An article as claimed in claim 21, wherein the seal is an automotive seal.

23. An article as in claim 1, wherein the thermoplastic elastomeric polymeric structure comprises a thermoplastic vulcanizate.

24. An article as in claim 1, and which has a density in a range of from 0.25 to 0.5 gm/cm³.

## Patentansprüche

1. Artikel, der eine mikrozelluläre, thermoplastisch-elastomere Polymerstruktur umfasst, die eine durchschnittlich Zellgrösse von weniger als 100 µm und eine bleibende Druckverformung von weniger als 30 % einschliesst.

2. Artikel gemäss Anspruch 1 mit einer bleibenden Druckverformung von weniger als 20 %.

3. Artikel gemäss Anspruch 2 mit einer bleibenden Druckverformung von weniger als 10 %.

4. Artikel gemäss Anspruch 3 mit einer bleibenden Druckverformung von weniger als 5 %.

5. Artikel gemäss Anspruch 1, worin die mikrozelluläre, thermoplastisch-elastomere Polymerstruktur ein thermoplastisch-elastomeres Olefin ist.

6. Artikel gemäss Anspruch 1, der eine Dichte von weniger als 0,5 g/cm³ hat.

7. Artikel gemäss Anspruch 6, der eine Dichte von weniger als 0,3 g/cm³ hat.

8. Artikel gemäss Anspruch 1, worin die mikrozelluläre, thermoplastisch-elastomere Polymerstruktur eine vernetzte Struktur ist.

9. Artikel gemäss Anspruch 5, worin die mikrozelluläre, thermoplastisch-elastomere Polymerstruktur ein metallocenkatalysiertes Polyethylen ist.

10. Artikel gemäss Anspruch 8, worin die vernetzte, thermoplastisch-elastomere Polymerstruktur ein thermoplastisch-elastomeres Olefin ist.

11. Artikel gemäss Anspruch 8, worin die vernetzte, mikrozelluläre, thermoplastisch-elastomere Polymerstruktur ein metallocenkatalysiertes Polyethylen ist.

12. Artikel gemäss Anspruch 1, worin die mikrozelluläre Polymerstruktur so konstruiert und in einer solchen Position angeordnet ist, dass sie wiederholt, mindestens 500 mal, um mindestens 50 % komprimiert wird.

13. Artikel gemäss Anspruch 11 mit einer bleibenden Druckverformung von weniger als 2 %.

14. Artikel gemäss Anspruch 1 mit einer Dichte von weniger als 0,5 g/cm³ und einer maximalen Zellgrösse von weniger als 125 µm.

15. Artikel gemäss Anspruch 14 mit einer bleibenden Druckverformung von weniger als 2 %.

16. Artikel gemäss mindestens einem der Ansprüche 1, 14 und 15 mit einer durchschnittlichen Zellgrösse von weniger als 75 µm.

17. Artikel gemäss Anspruch 16 mit einer durchschnittlichen Zellgrösse von weniger als 50 µm.

18. Artikel gemäss Anspruch 17 mit einer durchschnittlichen Zellgrösse von weniger als 30 gm.

19. Artikel gemäss mindestens einem der vorhergehenden Ansprüche, der eine Schuhsohle ist, die zur Befestigung an einen Oberschuh konstruiert ist.

20. Artikel gemäss mindestens einem der vorhergehenden Ansprüche, der ein Dichtflansch ist.

21. Artikel gemäss mindestens einem der vorhergehenden Ansprüche, der eine Dichtung ist.

22. Artikel gemäss Anspruch 21, worin die Dichtung eine Automobildichtung ist.

23. Artikel gemäss Anspruch 1, worin die thermoplastisch elastomere Polymerstruktur ein thermoplastisches Vulkanisat umfasst.

24. Artikel gemäss Anspruch 1, der eine Dichte im Bereich von 0,25-0,5 g/cm³ hat.

## Revendications

1. Article comprenant une structure polymère élastomère thermoplastique microcellulaire incluant une taille moyenne des cellules de moins que 100 µm et une déformation rémanente à la compression de moins que 30 %.

2. Article selon la revendication 1, avec une déformation rémanente à la compression de moins que 20 %.

3. Article selon la revendication 2, avec une déformation rémanente à la compression de moins que 10 %.

4. Article selon la revendication 3, avec une déformation rémanente à la compression de moins que 5 %.

5. Article selon la revendication 1, dans lequel la structure polymère.élastomère thermoplastique microcellulaire est une oléfine élastomère thermoplastique.

6. Article selon la revendication 1, avec une densité de moins que 0,5 gm/cm³.

7. Article selon la revendication 6, avec une densité de moins que 0,3 gm/cm³.

8. Article selon la revendication 1, dans lequel la structure polymère élastomère thermoplastique microcellulaire est une structure réticulée.

9. Article selon la revendication 5, dans lequel la structure polymère élastomère thermoplastique microcellulaire est un polyéthylène catalysé par métallocène.

10. Article selon la revendication 8, dans lequel la structure polymère élastomère thermoplastique réticulée est une oléfine élastomère thermoplastique.

11. Article selon la revendication 8, dans lequel la structure polymère élastomère thermoplastique microcellulaire réticulée est un polyméthylène catalysé par métallocène.

12. Article selon la revendication 1, la structure polymère microcellulaire construite et arrangée dans une position pour subir une compression de manière répétée, d'au moins 500 fois, d'au moins 50 %.

13. Article selon la revendication 11, avec une déformation rémanente à la compression de moins que 2 %.

14. Article selon la revendication 1, avec une densité de moins que 0,5 gm/cm³ et une taille maximum des cellules de moins que 125 µm.

15. Article selon la revendication 14, avec une déformation rémanente à la compression de moins que 2 %.

16. Article selon l'une quelconque des revendications 1, 14 et 15, avec une taille moyenne des cellules de moins que 75 µm.

17. Article selon la revendication 16, avec une taille moyenne des cellules de moins que 50 µm.

18. Article selon la revendication 17, avec une taille moyenne des cellules de moins que 30 µm.

19. Article selon l'une quelconque des revendications précédente, qui est une semelle de chaussure qui est construite pour fixation à un dessus de chaussure.

20. Article selon l'une quelconque des revendications précédentes, qui est une garniture.

21. Article selon l'une quelconque des revendications précédentes, qui est un joint.

22. Article selon la revendication 21, dans lequel le joint est un joint pour automobile.

23. Article selon la revendication 1, dans lequel la structure polymère élastomère thermoplastique comprend un produit de vulcanisation thermoplastique.

24. Article selon la revendication 1, et qui a une densité dans une gamme de 0,25 à 0,5 gm/cm³.
